# EUROPÄISCHE PATENTSCHRIFT

(11) **EP 2 026 249 B1**
(45) Veröffentlichungstag und Bekanntmachung des Hinweises auf die Patenterteilung: **10.02.2010**
(21) Anmeldenummer: 07015756.5
(22) Anmeldetag: 10.08.2007
(51) Int. Cl.: G06K 9/20, G06K 9/26, G06K 7/10

(54) **Aufnahme entzerrter Bilder bewegter Objekte mit gleichmässiger Auflösung durch Zeilensensor**
Recording straightened images of moving objects with even resolution via a line sensor
Réception d'images corrigées d'objets déplacés à l'aide d'une dissolution régulière à l'aide d'un capteur horizontal

(43) Veröffentlichungstag der Anmeldung: 18.02.2009
(73) Patentinhaber: SICK AG, 79183 Waldkirch (DE)
(72) Erfinder: Reichenbach, Jürgen, 79312 Emmendingen (DE); Gehring, Roland, 79215 Elzach (DE); Reich, Jan, 79215 Elzach (DE); Wiegers, Michael, 79104 Freiburg (DE)
(74) Vertreter: Ludewigt, Christoph

(56) Entgegenhaltungen:
- EP-A- 0 833 270
- WO-A-02/092246

## Beschreibung

Die Erfindung betrifft eine Vorrichtung und ein Verfahren zum Aufnehmen entzerrter Bilder einer Oberfläche von auf einer Fördereinrichtung bewegten Objekten nach dem Oberbegriff von Anspruch 1 beziehungsweise 15.

Für die Automatisierung von Logistikaufgaben werden Objekte, beispielsweise Pakete, mit einem Code versehen, der beim Sortieren und Zuordnen von Paketen automatisch ausgelesen wird. Besonders weit verbreitet sind Barcodes, die von Barcodescannern erfasst werden können. Daneben gibt es aber auch zweidimensionale Codes, wie den Maxicode oder den Aztec Code, oder klassische Adressbeschriftungen. Entsprechende Codeleser sind für automatische Sortieraufgaben, etwa bei der Fluggepäckabfertigung oder in Logistikzentren, über einem Förderer montiert, auf denen die mit dem Code versehenen Objekte vorbeifahren und nach Auswertung der Codeinformationen zu dem jeweilige Ziel hin aussortiert werden.

Codeleser der jüngeren Generation basieren nicht mehr auf einem Laserscanner, sondern auf einem Kamerachip. Dieser ist häufig als Zeile ausgebildet, die senkrecht oder in einem Winkel zu der Fördereinrichtung steht, und beim Vorbeifahren der Objekte wird nach und nach ein Gesamtbild zusammengesetzt. Um Codes auf allen Objektseiten erkennen zu können, also eine omnidirektionale Lesung vorzunehmen, sind mehrere derartige Zeilenkameras über und neben dem Förderband montiert.

Das aus den Zeilen zusammengesetzte Gesamtbild ist aber durch unterschiedliche Perspektiven häufig zu verzerrt, um zuverlässig ausgewertet werden zu können. Weiter hinten liegende Objektbereiche oder Oberflächen von Objekten, die in einem schlechten Winkel zu der Zeilenkamera stehen, werden mit einer geringeren Auflösung aufgenommen als eine Vorderseite der Objekte, die im Idealfall sogar senkrecht zu der Zeilenkamera steht. Da in der Praxis die Lage der Objekte nicht immer beherrscht wird, treten Fehllesungen auf. Ein mehr oder weniger stark verzerrtes Bild erschwert das Auslesen von Codes, besonders aber eine automatische Texterkennung (OCR) von Adressfeldern oder anderen Informationen. Auch sind verzerrt aufgenommene Objektbereiche bei aufgezeichneten Bilddaten, sogenanntem Videocoding zur manuellen oder externen Nachbearbeitung, schwer zu erkennen. Überdies fällt es gängigen Texterkennungsprogrammen schwer, Bilder zu verarbeiten, die eine über die Bildbereiche unterschiedliche Auflösung der aufgenommenen Objekte aufweisen.

Aus der US 2005/0036185 A1 ist eine Vorrichtung mit einem Linienscanner bekannt, welche das Bild eines vorbeibewegten Objekts zeilenweise aufnimmt und zusammensetzt. Dieses Bild wird anschließend mit einer Bildbearbeitungssoftware entzerrt, von der jede aufgenommene Linie reskaliert wird, damit alle Scanlinien des Objekts dieselbe Auflösung erhalten. Da die Zeilen im Moment der Bearbeitung bereits aufgenommen sind, ist dies nur möglich, wenn jede Zeile auf die schlechteste Auflösung unter allen Zeilen gebracht werden. Man erreicht also eine gleichmäßige Pixelauflösung nur um den Preis einer schlechteren Bildqualität und einer rechenintensive Nachbearbeitung.

Die WO02/092246 A1 offenbart eine Vorrichtung zur Bildaufnahme von auf einer Transporteinrichtung bewegten quaderförmigen Gegenständen mit mindestens einer Zeilenkamera. Ein Zoom-Objektiv der Zeilenkamera weist einen Verstellantrieb auf, welcher so angesteuert wird, dass die aufzunehmende Fläche in jeder Zeile mit annähernd gleichem Abbildungsmaßstab aufgenommen wird. Die Anwendung ist dabei auf quaderförmige, zueinander ausgerichtet geförderte Objekte beschränkt.

In der EP 0 833 270 A2 ist ein Verfahren zur Erfassung von Informationen durch eine Zeilenkamera offenbart, an der zu identifizierende Gegenstände vorbeigefördert werden. Dabei ist die Bilderfassungsfrequenz der Kamera an die Fördergeschwindigkeit der Gegenstände derart angepasst, dass die Bildauflösung in Zeilenrichtung in etwa derjenigen senkrecht zur Zeilenrichtung entspricht.

Es ist daher Aufgabe der Erfindung, eine auf einem Zeilensensor basierende Bildaufnahme zu ermöglichen, welche qualitativ hochwertige verzerrungsfreie Bilder der Oberflächen bewegter Objekte unabhängig von der Objektlage erzeugen kann.

Diese Aufgabe wird durch eine Vorrichtung mit einem Geometrie-Erfassungssensor und einem Zeilensensor gemäß Anspruch 1 beziehungsweise ein Verfahren gemäß Anspruch 15 gelöst. Indem erfindungsgemäß Einstellungen der Hardware geändert werden, wird jede Zeile durch Anpassung des Zoomfaktors mit einer gleichmäßigen und hohen Auflösung aufgenommen und durch Variation der Aufnahmefrequenz erreicht, dass auch die Zeilen über das Objekt hinweg eine gleichmäßige und hohe Auflösung des Gesamtbildes liefern. Dies hat den Vorteil, dass die Hardware unmittelbar hoch aufgelöste und verzerrungsfreie Bilder liefert. Im Gegensatz zu einer nachträglichen Bearbeitung in einer Bildbearbeitungssoftware werden daher Bilder von Anfang an mit der benötigten Informationsdichte und Auflösung aufgenommen, so dass keinerlei Qualitätseinbußen durch eine Nachbearbeitung hingenommen werden müssen. Die erfindungsgemäße Lösung ist überdies schnell, weil die Daten unmittelbar bei der Aufnahme schon entzerrungsfrei sind und keiner Überarbeitung zur Entzerrung bedürfen.

Die Erfindung geht also von dem Prinzip aus, Verzerrungsfaktoren direkt an der Quelle zu unterbinden und die Hardware in jeder Zeile so einzustellen, dass schon unmittelbar bei der Aufnahme verzerrungsfreie Bilddaten entstehen.

Der an dieser Stelle verwendete Begriff Abstandsprofil bezeichnet im allgemeinen Fall eine Funktion, welche die Entfernungen von Objekt zu Zeilensensor über die Zeilenrichtung beschreibt. Unter Abstandsprofil soll aber auch der einfachste Fall eines einzelner Abstandswerts für die jeweilige Zeile verstanden werden, der im besonders häufigen Fall quaderförmiger Objekte das dann konstante Abstandsprofil bereits vollständig definiert, und ansonsten im Falle beliebig geformte Objekte zumindest eine gute Näherung angibt.

Dabei ist die Steuerung bevorzugt dafür ausgebildet, den Zoomfaktor so einzustellen, dass das Lesefenster jeweils eine Ausdehnung hat, die der absoluten maximalen Objektausdehnung in Zeilenrichtung über alle abgetasteten Zeilen eines Objekts entspricht. Damit ist als Skalierungsfaktor für das Lesefenster, dessen Ausdehnung linear mit dem Zoomfaktor zusammenhängt, die richtige Bezugsgröße gewählt, nämlich die Objektgröße. Geht man von einer seitlichen Lage des Zeilensensors aus, so ist diese Objektgröße gerade die maximale Höhe. Indem alle Lesefenster auf diese Höhe eingestellt werden, passt das Objekt gerade mit seiner größten Ausdehnung in das Gesamtbild, so dass die verfügbare Auflösung optimal ausgenutzt wird.

Die Steuerung ist weiterhin bevorzugt dafür ausgebildet, die Aufnahmefrequenz so einzustellen, dass die abgetasteten Zeilen regelmäßig über die geometrische Oberfläche verteilt werden. Hierzu ist zunächst anzumerken, dass die Steuerung eigentlich nicht die Aufnahmefrequenz, sondern das Intervall zwischen zwei Aufnahmen durch die Zeilenkamera steuert, also gerade den Kehrwert der Aufnahmefrequenz. Über diese Kehrwertbeziehung lässt sich aber die Aufnahmefrequenz, als Funktion der Zeit aufgefasst, in die Periode umrechnen. Mit der geometrische Oberfläche ist die tatsächliche, absolute Objektoberfläche gemeint, also nicht die von der Schräglage des Objekts abhängige Oberfläche, die sich aus Perspektive der Zeilenkamera bietet. Die Aufnahmefrequenz wird also nach dieser Weiterbildung gerade so gewählt, dass die aufgenommenen Zeilen regelmäßig über der tatsächlichen Objektoberfläche verteilt liegen. Damit wird die Auflösung nicht nur in der Zeilenrichtung, die über den Zoomfaktor eingestellt wird, sondern auch quer zu dieser Zeilenrichtung gleich. Das zusammengesetzte Gesamtbild ist also in seinen beiden Achsen nicht nur entzerrt, sondern zusätzlich mit gleichmäßiger Auflösung aufgenommen: in der einen Achse durch die Aufnahmefrequenz, in der anderen Achse durch den Zoomfaktor.

In einer vorteilhaften Ergänzung zu den wichtigen genannten Aufnahmenparametern Zoomfaktor und Aufnahmefrequenz ist die Steuerung auch dafür ausgebildet, eine Fokuseinstellung des Zeilensensors aus einem Maß des Abstandsprofils, insbesondere einem Extremum oder einem Mittelwert, einzustellen und/oder eine Helligkeit des Zeilensensors über eine Belichtungszeit oder einen Verstärkungsfaktor einzustellen, um Veränderungen auszugleichen, welche durch Variation des Zoomfaktors und/oder der Aufnahmefrequenz entstehen. Wenn das Abstandsprofil, wie im Falle quaderförmiger Objekte, durch einen einzelnen Abstandswert angegeben ist, entspricht das genannte Maß genau diesem Abstandswert. Dann fallen Extrema und Mittelwert in diesem Abstandswert zusammen. Da die Fokuslage ein einzelner Wert ist, kann sie sich nicht an das ganze Abstandsprofil, sondern nur an einen einzelnen charakteristischen Wert anpassen, eben dieses Maß.

Aufgrund der Fokuseinstellung liefert der Zeilensensor in jeder Zeile ein scharfes Bild. Da erfindungsgemäß verschiedene Aufnahmeparameter von Zeile zu Zeile variiert werden, ist eine regelmäßige Helligkeit nur dann zu gewährleisten, wenn entsprechend nachgeregelt wird. Solange die Aufnahmefrequenz gering genug ist, dass Zeit bleibt, die Belichtungszeit zu variieren, ist dies eine mögliche Maßnahme. Andernfalls müssen Verstärkungsparameter nachgeregelt werden, um die Helligkeit in Bereichen höherer Aufnahmefrequenz oder größeren Zoomfaktors zu erhöhen. Mit dieser Maßnahme ist gewährleistet, dass keine Helligkeitsunterschiede auftreten, die ohnehin größtenteils ein Artefakt der variierten Aufnahmeparameter wären und ohne verwertbaren Informationsgehalt sind, und ein gleichmäßig helles Gesamtbild erhalten wird. Diese Betrachtung, für die skalaren Aufnahmeparameter ein skalares Maß des Abstandsprofils heranzuziehen, gilt analog für alle Aufnahmeparameter Zoomfaktor, Aufnahmefrequenz und Fokuslage, während die Verstärkungsfaktoren für die Helligkeit alternativ auch je Pixel an das gesamte Abstandsprofil angepasst werden können.

In einer Weiterbildung ist der Geometrie-Erfassungssensor in den Zeilensensor integriert. Für Autofokussysteme ist dieses Verfahren bekannt, in dem ein aktueller Objektabstand im Lesefenster verwendet wird, um den Fokus zu regeln. Entsprechend kann, sofern das Zoom schnell genug reagiert, auch der Zoomfaktor und die Aufnahmefrequenz geregelt werden. Der Vorteil ist eine äußerst kompakte Vorrichtung, die ohne zusätzlichen Geometrie-Erfassungssensor auskommt.

Alternativ ist der Geometrie-Erfassungssensor dem Zeilensensor in Förderrichtung vorgeordnet und die Steuerung ist dafür ausgebildet, das Abstandsprofil abhängig von der Förderposition der Objekte im Voraus zu berechnen. Auf diese Weise verbleibt genügend Zeit, die zu variierenden Aufnahmeparameter rechtzeitig zur Verfügung zu stellen und, gerade bei höheren Fördergeschwindigkeiten, der Trägheit des Fokus- und Zoomsystems gerecht zu werden.

Dabei ist bevorzugt ein Geschwindigkeitssensor vorgesehen, welcher die Fördergeschwindigkeit bestimmen kann, wobei die Steuerung die von der Förderposition abhängigen Zoomfaktoren und/oder Aufnahmefrequenzen mittels der Fördergeschwindigkeit in zeitabhängige Zoomfaktoren und/oder Aufnahmefrequenzen umrechnen kann. Die Fördergeschwindigkeit wird also ausgenutzt, die Objektgeometrie quasi virtuell zu verschieben, um die Situation zu simulieren, dass die gerade vermessene Geometrie im Lesefenster liegt. Indem daraus zeitabhängige Zoomfaktoren und zeitabhängige Aufnahmefrequenzen berechnet werden, kann die Ansteuerung des Zeilensensors mit dem bevorzugt für ihn maßgeblichen Referenzsystem, nämlich der Zeit, vorgenommen werden.

Noch bevorzugter ist der Geschwindigkeitssensor als einer der folgenden implementiert: ein Inkrementalgeber an der Fördereinrichtung, und/oder eine Geschwindigkeits-Auswertungseinrichtung an dem Geometrie-Erfassungssensor oder dem Zeilensensor, die eine Verzerrung erwarteter Objektkonturen auswerten kann, und/oder eine Vergleichseinheit, welche ein Objektmerkmal in den Geometriedaten und den Bilddaten wiedererkennen und aus der Zeitdifferenz der Datenaufnahme und dem Abstand von Geometrie-Erfassungssensor und Zeilensensor die Geschwindigkeit ermittelt. Inkrementalgeber sind als zuverlässige Geschwindigkeitsmesser einer Fördereinrichtung bekannt, benötigen aber ein zusätzliches Bauteil. Mit den Möglichkeiten, über die Objektkonturen oder die benötigte Zeit, in der das Objekt den Weg von dem Geometrie-Erfassungssensor zu dem Zeilensensor zurücklegt, die Geschwindigkeit zu bestimmen, wird kein weiterer Sensor benötigt, sondern es genügt eine integrierte Auswertung.

Vorteilhafterweise ist die Steuerung dafür ausgebildet, die Abstandprofile zu jeder einer maximalen oder vorgegebenen konstanten Aufnahmefrequenz des Zeilensensors entsprechenden Förderposition zu berechnen. Auf diese Weise wird die Geometrie des Objekts besonders genau berücksichtigt, und es entsteht ein besonders entzerrungsfreies und gleichmäßig aufgelöstes Gesamtbild.

Alternativ ist die Steuerung dafür ausgebildet, Abstandsprofile nur für ausgezeichnete Förderpositionen zu berechnen, in denen sich insbesondere Ecken oder Kanten eines Objekts im Lesefenster befinden, und die dazwischenliegenden Förderpositionen werden stufenförmig oder linear interpoliert, wobei insbesondere die Steuerung auch die Zoomfaktoren und/oder die Aufnahmefrequenz stufenförmig oder linear nachführen kann. Die weitaus meisten zu sortierenden Objekte sind rechteckig, so dass eine genauere Berücksichtigung der Objektkonturen einen unnötigen Rechenaufwand erzeugt. Mit der genannten vorteilhaften Weiterbildung wird die Annahme einfacher Objektflächen in einer entsprechend vereinfachten Nachführung der Aufnahmeparameter umgesetzt. Es genügt, an einem Eckpunkt den Zoom und die Aufnahmefrequenz einmal einzustellen und dann eine konstante Veränderung von Zeile zu Zeile vorzugeben, bis ein weiterer Eckpunkt erreicht ist ("Zoomrampen", "Frequenzrampen", analog auch "Fokusrampen" oder "Helligkeitsrampen"). Dies erleichtert die Auswertung und Steuerung erheblich.

In einer bevorzugten Weiterbildung ist die Steuerung dafür ausgebildet, Abstandsprofile in Zeilen in der Umgebung eines Objekts aus Abstandsprofilen des Objektrandes zu extrapolieren, um einen weichen Übergang zu ermöglichen. Dies hilft besonders für die Kante, die zuerst in das Lesefenster eintritt. Indem die Objektkonturen virtuell nach vorne verlängert werden, können Zoom oder Fokus bereits vorzeitig in die benötigte Lage geführt und damit deren Trägheit ausgeglichen werden.

In einer speziellen bevorzugten Ausführungsform ist die Steuerung dafür ausgebildet, den Zeilensensor auf einen Basis-Zoomfaktor und/oder eine Basis-Aufnahmefrequenz einzustellen, die einem Referenzabstandsprofil entsprechen, und Abweichungen von Zeile zu Zeile differenziell gegenüber der vorherigen Zeile oder gegenüber dem Basis-Zoomfaktor und/oder der Basis-Aufnahmefrequenz einzustellen. Die Referenzlage kann die Höhe der Fördereinrichtung sein, besser aber eine ungefähr mittlere zu erwartende Objekthöhe. Damit müssen Fokus und Zoom in den allermeisten Fällen nur um eine kleine Veränderung nachgeführt werden, was sowohl der Mechanik entgegenkommt, als auch erneut langsame Reaktionen aufgrund von Trägheit weitgehend verhindert.

Vorteilhafterweise ist der Geometrie-Erfassungssensor ein Laserscanner oder ein Bildsensor, insbesondere ein entfernungsauflösender Bildsensor. Der Laserscanner misst Abstände zu Objekten und Förderband aus der Lichtlaufzeit eines ausgesandten und wieder empfangenen Lichtpulses oder einer Phasenverschiebung von ausgesandtem modulierten Licht. Damit ist eine sehr genaue Bestimmung der Objektgeometrie möglich. Ein allgemeiner Bildsensor kann Objekte aufgrund einer Bildauswertung bestimmen, etwa anhand ihrer Farbe, Form oder der Remissionseigenschaften. Denkbar ist auch der Einsatz von Bildsensoren, die selbstständig zusätzlich zu den üblichen Farb- oder Helligkeitsdaten ihrer Pixel auch eine Entfernung aufgrund eines Lichtlaufzeitverfahrens bestimmen können. Solche Bildsensoren sind als PMD-Chips (Photonmischdetektion) auf CMOS-Basis verfügbar.

Bevorzugt ist die Steuerung dafür ausgebildet, bei Vorhandensein mehrerer Objekte im Lesefeld das Abstandsprofil auf das vom Zeilensensor aus vorderste Objekt oder hinterste Objekt zu beziehen oder jeweils unter unvollständigem Erfassen von Objekten das vorderste Abstandprofile zu berechnen. Objekte im Schatten kann der Zeilensensor nicht erkennen. Es sollte also vorab festgelegt werden, auf welche Objektkontur der Zeilensensor eingestellt wird. Nimmt er jeweils die vorderste Kontur auf, so gehen keine Informationen verloren. Konzentriert er sich vorab auf das vordere oder hintere Objekt, so muss sichergestellt werden, dass das übergangene Objekt auch von einem anderen Zeilensensor gelesen und ausgewertet werden kann.

In einer vorteilhaften Weiterbildung ist eine Nachbearbeitungseinheit vorgesehen, welche für die digitale Nachbearbeitung zur weiteren Entzerrung der Bilddaten ausgebildet ist, wobei die Steuerung der Nachbearbeitungseinheit für die Verzerrung relevante Parameter übergibt, insbesondere die Schräglage eines Objekts oder die Fördergeschwindigkeit. Obwohl erfindungsgemäß unmittelbar entzerrte Bilddaten aufgenommen werden, kann eine residuelle Verzerrung verbleiben, etwa weil kein Zoomobjektiv vorhanden ist und deshalb nur die Aufnahmefrequenz modifiziert wird, oder weil wegen extrem schleifendem Winkel bei fast paralleler Lage einer Objektfläche bezüglich des Zeilensensors die maximale Aufnahmefrequenz nicht hinreicht, diese beinahe abgewandte Seite mit genügender Auflösung aufzunehmen. Digital können dann beispielsweise Füllzeilen eingefügt, die Zeilen reskaliert oder Bildverarbeitungsfilter eingesetzt werden. Damit ist sichergestellt, dass die aufgenommene Information in bestmöglicher Aufbereitung und zumindest in einem für nachgelagerte Bildverarbeitungen wie Texterkennungen in einem verarbeitbaren Format mit der erwarteten Auflösung verfügbar sind. Die digitale Nachbearbeitung ist deutlich erleichtert, wenn Parameter wie die Schräglage oder die Geschwindigkeit nicht in der Nachbearbeitungseinheit selbst bestimmt werden müssen, weil sie übergeben werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer Ausführungsform der erfindungsgemäßen Vorrichtung über einem Förderband mit mehreren darauf bewegten Objekten;
- Fig. 2a: eine Draufsicht auf eine Zeilenkamera und ein Objekt in idealem 45°- Winkel bei gleichmäßiger Aufnahmefrequenz;
- Fig. 2b: eine Draufsicht gemäß Figur 2a mit einem Objekt unter einem von den idealen 45° abweichenden Winkel bei gleichmäßiger Aufnahmefrequenz;
- Fig. 2c: eine Draufsicht gemäß Figur 2c mit einem Objekt unter einem von den idealen 45° abweichenden Winkel bei dynamisch an die Objektgeometrie und Objektlage angepasster Aufnahmefrequenz;
- Fig. 3a-3c: eine Darstellung gemäß den Figuren 2a-2c jeweils als Seitenansicht aus Sicht der Zeilenkamera;
- Fig. 4a: eine Seitenansicht der Zeilenkamera auf ein schräg liegendes Objekt und das entstehende Gesamtbild bei konstantem Zoomfaktor;
- Fig. 4b: eine Seitenansicht gemäß Figur 4a bei dynamisch an die Objektgeometrie und Objektlage angepasstem Zoomfaktor;
- Fig. 5: eine Seitenansicht gemäß Fig. 4a bei sowohl dynamisch an die Objektgeometrie und Objektlage angepasster Aufnahmefrequenz und angepasstem Zoomfaktor;
- Fig. 6a: eine schematische Draufsicht auf ein Objekt zur Erläuterung der ausgezeichneten Förderpositionen und der Interpolation bei einem quaderförmigen Objekt;
- Fig. 6b: eine Draufsicht gemäß Figur 6b bei einem unregelmäßig geformten Objekt;
- Fig. 7a: eine schematische dreidimensionale Darstellung einer Situation, in der ein hinteres Objekt von einem vorderen Objekt aus Sicht der Zeilenkamera abgeschattet ist; und
- Fig. 7b: eine Draufsicht gemäß Figur 7a zur Erläuterung der von der Steuerung für die Zeilenkamera zur Aufnahme ausgewählten Objektkonturen.

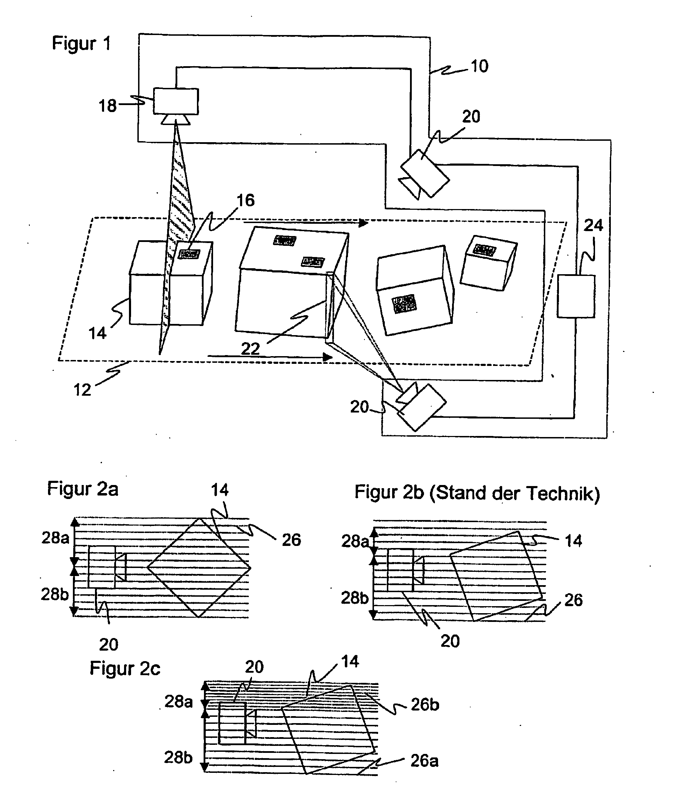

Figur 1 zeigt in einer dreidimensionalen schematischen Darstellung eine Ausführungsform der erfindungsgemäßen Lesevorrichtung 10, die über einem Förderband 12 montiert ist, auf dem Objekte 14 in der durch Pfeile angedeuteten Richtung bewegt werden. Die Objekte 14 tragen Codeinformationen 16, beispielsweise Barcodes, zweidimensionale Codes oder Adressbeschriftungen, die auszulesen Aufgabe der Lesevorrichtung 10 ist. Ein bezüglich der Förderrichtung vorgeordneter Geometrie-Erfassungssensor 18 nimmt das geometrische Profil der an ihm vorbei bewegten Objekte 14 auf. Der Geometrie-Erfassungssensor 18 kann als Laserscanner ausgebildet sein, der mit einem Lichtlaufzeitverfahren die Abstände der Objekte 14 misst. Alternativ kann der Geometrie-Erfassungssensor 18 ein Bildsensor sein, und die Objektgeometrie wird mittels eines Bildauswertungsverfahrens bestimmt. In einer Kombination beider Prinzipien ist der Geometrie-Erfassungssensor 18 als entfernungsmessender Bildsensor ausgebildet, beispielsweise mittels Photonmischdetektion oder Triangulation (aktiv mit Beleuchtungsmuster oder passiv mit Stereoskopie).

Die eigentlichen Bilddaten, aus denen die Codeinformationen 16 extrahiert werden sollen, nehmen Zeilensensoren 20 auf, die zu verschiedenen Seiten der Fördereinrichtung 12 montiert sind. Ist der Geometrie-Erfassungssensor 18 als Bildsensor ausgebildet, so kann er die Funktionalität einer dieser Zeilensensoren 20 mit übernehmen. Die Zeilensensoren 20 sind in der Lage, jeweils eine Bildzeile in ihrem Sichtfeld aufzunehmen, nämlich innerhalb eines Lesefelds 22. Dargestellt in Figur 1 sind zwei Seitenkameras 20. In weiteren Anwendungen können mehr oder weniger Kameras 20 eingesetzt werden, je nachdem in welchen Richtungen Objekte 14 Codeinformationen 16 tragen können. Die Zeilensensoren 20 weisen bevorzugt zeilenförmigen Bildsensoren, also etwa CCD- oder CMOS-Chips auf. Mit dem Geometrie-Erfassungssensor 18 und den Zeilenkameras 20 ist eine Steuerung 24 verbunden, welche Geometriedaten von dem Geometrie-Erfassungssensor 18 erhält, und Aufnahmeparameter der Zeilenkameras 20 steuern kann. Umgekehrt erhält die Steuerung 24 Bilddaten der jeweils aufgenommenen Zeile in dem Lesefeld 22 und ist in der Lage, diese zeilenweise ausgelesen Bilddaten zu einem Gesamtbild zusammenzusetzen und weiteren Verarbeitungseinrichtungen zur Verfügung zu stellen.

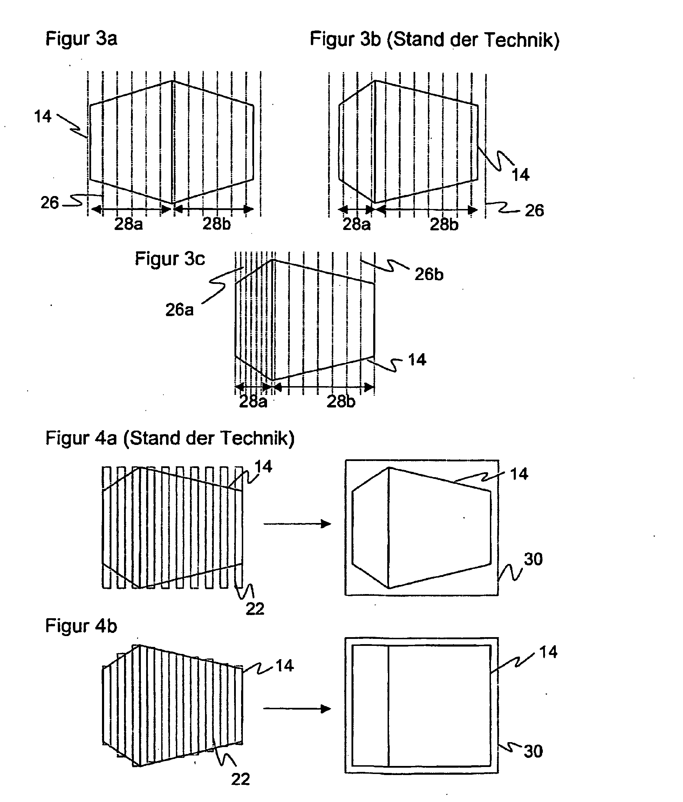

Figur 2a zeigt aus der Draufsicht die Lage eines gerade auf der Fördereinrichtung 12 liegenden quaderförmigen Objekts 14 gegenüber einer Seitenkamera, die im 45°-Winkel angeordnet ist. Figur 3a zeigt dieselbe Situation aus der Perspektive der Kamera 20. Hier wie im Folgenden werden gleiche Merkmale mit gleichen Bezugszeichen gekennzeichnet. Diese Anordnung der Seitenkamera 20 ist bevorzugt, da aus einem 45°-Winkel die Vorder- und Seitenflächen eines gerade liegenden quaderförmigen Objekts 14 gleich gut erkannt werden. Mit gestrichelten Linien 26 sind verschiedene Zeitpunkte skizziert, in denen die Zeilenkamera 20 eine Zeile aufnimmt. In Wirklichkeit kann die Zeilenkamera 20, da sie fixiert ist, nur die mittig gelegene Zeile 26 aufnehmen. Die verschiedenen gestrichelten Linien 26 sollen also verschiedene Förderpositionen des Objekts 14 darstellen, welches sich in zeitlicher Abfolge an der Zeilenkamera 20 vorbeibewegt. Wenn das Objekt 14 gerade liegt, sind die Aufnahmezeilen 26 gleichmäßig über das Objekt verteilt, so dass in Förderrichtung eine gleichmäßige Auflösung des Gesamtbildes resultiert. Dies ist auch in den beiden gleich langen Pfeilen 28a, 28b reflektiert, welche die scheinbare Größe der Vorder- und Seitenfläche aus Sicht der Zeilenkamera 20 repräsentieren.

In Figur 2b ist ebenfalls in Draufsicht zum Vergleich die Lage eines schief auf der Fördereinrichtung 12 liegenden Objekts 14 bei einem Aufnahmeverfahren nach dem Stand der Technik dargestellt. Figur 3b zeigt erneut dieselbe Situation aus der Perspektive der Kamera. Eine regelmäßige Aufnahmefrequenz, also gleichmäßig beabstandete Lesezeilen 26, führt dazu, dass die Vorderfläche mit einer höheren Auflösung aufgenommen wird als die Seitenfläche, die aus Sicht der Zeilenkamera 20 wegen der Perspektive verkleinert ist (Pfeil 28a gegenüber Pfeil 28b). Deshalb kreuzen weniger Aufnahmezeilen 26 die Seitenfläche, die also mit einer geringeren Auflösung aufgenommen wird. Das führt zu einer Verzerrung des Gesamtbildes oder zumindest zu einer ungleichmäßigen Auflösung, welche Auswertungen des Gesamtbildes erschwert.

Dagegen wird erfindungsgemäß, wie in Draufsicht in Figur 2c und aus der Perspektive der Kamera in Figur 3c dargestellt, die Aufnahmefrequenz variiert. Die zu der Zeilenkamera 20 hin geneigte Vorderfläche wird mit einer geringeren Aufnahmefrequenz aufgenommen als die von der Zeilenkamera 20 weg geneigte Seitenfläche. Das Verhältnis der Aufnahmefrequenzen, das aus der unterschiedlichen Dichte der abgetasteten Zeilen 26a und 26b abgelesen werden kann, entspricht gerade dem umgekehrten Verhältnis der scheinbaren Größen, die durch Pfeile 28a und 28b dargestellt sind.

Die Steuerung 24 berechnet also vorab die Lage des Objekts 14 aus Perspektive der Zeilenkamera 20 und bestimmt daraus eine modifizierte Aufnahmefrequenz, die entsprechend höher liegt, wenn eine Objektfläche von der Zeilenkamera 20 weg geneigt ist, als wenn diese Objektfläche zu der Zeilen kamera 20 hin weist. In diese Berechnung fließt die Fördergeschwindigkeit der Fördereinrichtung 12 ein, welche durch externe Inkrementalgeber oder interne Berechnungen aus der Wiedererkennung gleicher Objekte oder Verzerrungen von der erwarteten Rechteckform der Quaderflächen bekannt ist.

Um die Bilddatenmenge zu begrenzen, kann vorgesehen sein, die Aufnahmefrequenz immer dann gleich Null zu setzen oder zumindest drastisch zu reduzieren, wenn kein Objekt 14 im Lesefenster 22 der Zeilenkamera 20 liegt.

Figur 4a illustriert ein weiteres Problem, welches bei der Aufnahme eines Gesamtbildes mit Hilfe einer Zeilenkamera zu Bildverzerrungen führt. Weiter hinten liegende Objektflächen oder Teile von Objektflächen sind aus Sicht der Kamera kleiner als weiter vorne liegende. Bei einem konstanten Zoomfaktor haben die Lesefenster 22 aber unabhängig von dieser scheinbaren Objektgröße konstante Ausdehnung. Daher erscheinen in dem Gesamtbild 30, welches die Steuerung 24 aus den einzelnen Zeilen zusammensetzt, die eigentlich rechteckigen Seitenflächen des Objekts 14 als Trapeze.

Erfindungsgemäß wird, wie in Figur 4b dargestellt, jedes Lesefenster 22 durch entsprechende Wahl des Zoomfaktors an die Objektgröße 14 angepasst. Deshalb werden in dem Gesamtbild 30 die Vorderflächen zu Rechtecken, die perspektivischen und objektlagenabhängigen Effekte, die zu den Trapezen führen, sind also entzerrt. Ist das Objekt 14 nicht wie dargestellt quaderförmig, so werden die Lesefenster 22 an die größte Höhe einer Fläche des Objekts 14 angepasst. Würden die Lesefenster auch einer unregelmäßigen Kontur des Objekts 14 folgen, so entsteht wiederum eine künstliche Verzerrung, weil eine rechteckige Form aufgezwungen würde.

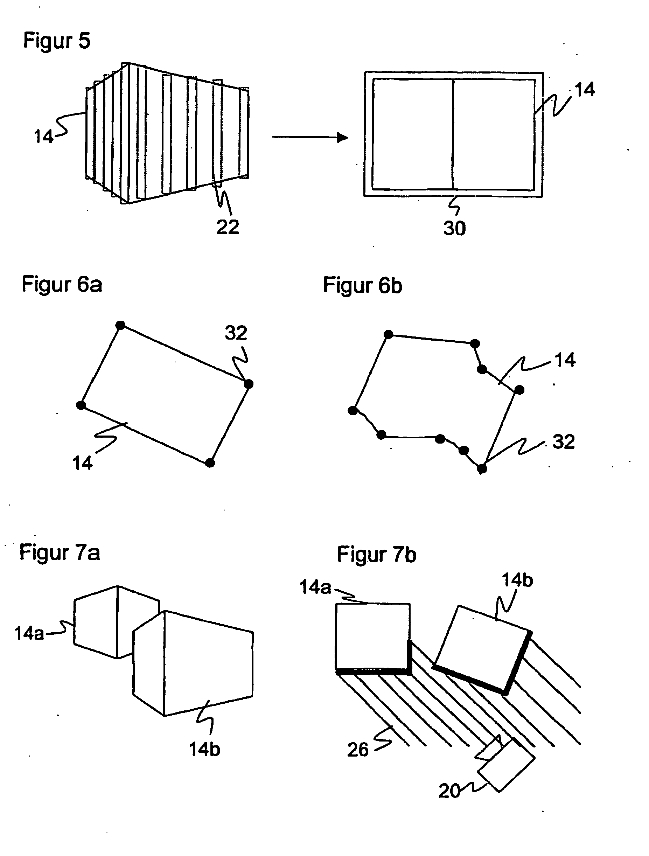

Die im Zusammenhang mit Figur 2 und 3 beschriebene Anpassung der Aufnahmefrequenz und die im Zusammenhang mit Figur 4 beschriebene Anpassung des Zoomfaktors kann auch kombiniert werden. Dies ist in Figur 5 dargestellt. Dabei werden die Lesefenster 22a auf der zugeneigten, scheinbar größeren Vorderfläche über die Aufnahmefrequenz in einem größeren Abstand zueinander angeordnet als die Lesefenster 22b auf der abgeneigten und scheinbar kleineren Seitenfläche. Zudem werden alle Lesefenster 22a, 22b über den Zoomfaktor an die Höhe des Objekts 14 angepasst. Das Ergebnis ist ein Gesamtbild 30, in dem die Flächen des Objekts 14 verzerrungsfrei rechteckig sind, als wären sie aus einer senkrechten Perspektive aufgenommen worden.

Bei der bisher beschriebenen Ausführungsform wurden jeweils nur quaderförmige Objekte 14 betrachtet. Im Falle unregelmäßig geformter Objekte muss einerseits der Zoomfaktor wie bereits beschrieben auf eine Maximalausdehnung bezogen werden, aus Sicht der seitlichen Zeilenkamera 20 also eine maximale Höhe. Ähnlich hängt die Aufnahmefrequenz unmittelbar von dem Winkel ab, unter dem die Zeilenkamera 20 den momentan im Lesefenster 22 befindlichen Oberflächenbereich des Objekts 14 sieht. Dabei kann die Unregelmäßigkeit des Objekts dazu führen, dass auch über die Zeile des Messfensters 22 hinweg die Abstände variieren, sich hier also ein Abstandsprofil ergibt. Dieses Abstandsprofil muss dann durch ein geeignetes Maß auf einen einzelnen Wert zurückgeführt werden, beispielsweise ein Extremum oder einen Mittelwert. Kompliziertere, anwendungsbezogene Maße sind denkbar. Eine einfache Möglichkeit, nicht quaderförmige Objekte 14 zu berücksichtigen ist, einen umhüllenden Quader zu ermitteln und sämtliche Aufnahmeparameter auf diesen Quader zu beziehen.

Ebenso wurde jeweils nur die Perspektive einer seitlich angeordneten Zeilenkamera 20 beschrieben. Die Erfindung umfasst ebenso sämtliche anderen denkbaren Lagen der Zeilenkamera 20, wobei zu beachten ist, dass einige Kamerapositionen von der Erfindung deutlich weniger profitieren. Ein Beispiel hierfür wäre eine senkrecht über der Fördereinrichtung angeordnete Kamera, wenn die geförderten Objekte 14 quaderförmig sind. In diesem Fall ist eine dynamische Anpassung des Zoomfaktors oder der Aufnahmefrequenz nicht erforderlich.

Abweichend von der Darstellung in Figur 1 ist auch denkbar, dass der Geometrie-Erfassungssensor 18 in die Zeilenkamera 20 integriert ist. Dasselbe gilt für die Steuerung 24. Für den Geometrie-Erfassungssensor 18 ist aber zu beachten, dass eine Trägheit bei der Einstellung des Zoomfaktors wesentlich schwerer berücksichtigt werden kann, wenn die geometrischen Daten erst spät verfügbar sind.

Zusätzlich zu den beiden Aufnahmeparametern Zoomfaktor und Aufnahmefrequenz kann erfindungsgemäß auch die Fokuslage an die jeweilige Geometrie angepasst werden. Der erforderliche Fokusabstand kann aus den Geometriedaten auf einfache Weise bestimmt werden. Weiterhin variiert durch die Zoomeinstellungen und durch eine Veränderung der Aufnahmefrequenz auch die Helligkeit der Bilddaten. Dies kann, solange die maximale Aufnahmefrequenz nicht erreicht ist, durch eine Verlängerung der Belichtungszeit ausgeglichen werden, in jedem Fall durch eine Erhöhung der Verstärkung. Die erforderliche Modifikation der Helligkeit kann sowohl aus der Geometrie wie auch aus Veränderungen in der Helligkeit benachbarter Pixel abgeleitet werden, welche bei einer einheitlichen Paketfläche nicht zu erwarten sind.

Es kann aus verschiedenen Gründen vorteilhaft sein, die hardwaremäßig entzerrt aufgenommenen Bilddaten digital nachzubearbeiten. So ist beispielsweise bei extrem schleifendem Auftreffwinkel der Perspektive des Zeilensensors eine technisch bedingte maximal Aufnahmefrequenz die Grenze für die Adaptation. Dann kann digital zumindest durch Verdoppeln von Bildinformationen oder ähnliche Filter die Auflösung konstant gehalten werden. Auch kann eine Nachbearbeitung der Helligkeit oder eine weitere Reskalierung aufgrund der mit übergegebenen Geometriedaten oder Fördergeschwindigkeiten erfolgen. Andere Algorithmen zur Nachbearbeitung sind denkbar.

Gemäß einer Ausführungsform der Erfindung werden die Abstandsprofile und somit die Zoomfaktoren und die Aufnahmefrequenz für jede Zeileposition neu berechnet. Figur 6 illustriert ein einfacheres Verfahren, das auf Interpretation basiert und besonders bei regelmäßig geformten Objekten 14 sehr gut funktioniert. In Figur 6a ist ein quaderförmiges Paket 14 in Draufsicht dargestellt. Die Übergänge 32 werden als ausgezeichnete Punkte, nämlich Ecken des Pakets 14 erkannt. Zwischen den Punkten 32 wird ein lineares Verhalten angenommen. Zoomfaktor und Aufnahmefrequenz werden also an dem Punkt 32 zusammen mit einem differentiellen Steigungsparameter berechnet. Bis zum nächsten Punkt 32 wird dann jeweils nur der Steigungsparameter addiert, so dass keinerlei weitere Berechnungen erforderlich sind. Der Aufnahmeparameter der Zeilenkamera 20 wird also als eine Art Rampe linear modelliert. Statt einer linearen Interpolation sind auch andere denkbar, beispielsweise eine Stufenfunktion, welche die Mechanik des Zooms und des Fokus weniger oft anspricht. Das lnterpolationsverfahren funktioniert auch bei dem in Figur 6b dargestellten unregelmäßig geformten Paket 14, jedoch sind die interpolierbaren Teilstrecken zwischen zwei Punkten 32 wesentlich kürzer, so dass häufiger eine Neuberechnung erforderlich wird. Dabei werden Punkte 32 immer dann gesetzt, wenn der Winkel oder der akkumulierte Winkel in einer Kurve der Außenkontur des Objekts 14 einen Mindestwinkel überschreitet.

Figur 7 zeigt eine Situation, in der ein hinteres Objekt 14a aus Sicht der Zeilenkamera 20 von einem vorderen Objekt 14b teilweise verdeckt wird. In dieser Situation muss sich die Steuerung 24 entscheiden, auf welches Objekt 14a, 14b der Zeilensensor 20 eingestellt wird. Die Lösung gemäß Figur 7b ist, jeweils die der Zeilenkamera 20 nächstgelegene Kontur aufzunehmen. Alternativ wäre denkbar, in der Steuerung 24 vorab festzustellen, dass das hintere Objekt 14a ohnehin nicht vollständig gelesen werden kann, und sich nur auf das vordere Objekt 14b zu konzentrieren. Umgekehrt könnte auch nur das hintere Objekt 14a ausgelesen werden, etwa weil aus einer anderen Quelle bekannt ist, dass das vordere Objekt 14b auf den der Zeilenkamera 20 zugeneigten Flächen keine Codeinformationen trägt, beziehungsweise schon von einer anderen Zeilenkamera 20 ausgelesen wurde. Schließlich kann jeweils dasjenige Objekt gewählt werden, welches die größere absolute Fläche anbietet, weil dort die Wahrscheinlichkeit größer ist, eine relevante Information zu finden.

Erfindungsgemäß werden zusammenfassend hardwareseitig gleichmäßig aufgelöste und verzerrungsfreie Gesamtbilder erzeugt, die einem Bild entsprechen, weiches aus einer senkrechten Perspektive aufgenommen ist, obwohl die Objekte 14 in einer ungünstigen Schräglage gegenüber dem Zeilensensor 20 auf der Fördereinrichtung 12 bewegt werden. Derartige Gesamtbilder lassen sich hinsichtlich Texterkennung und weiterer Auswertungen, wie etwa einem Videocoding, wesentlich leichter weiter bearbeiten. Das Auslesen von Codeinformationen wird erleichtert und genauer.

## Patentansprüche

1. Vorrichtung (10), insbesondere Codeleser, zum Aufnehmen entzerrter Bilder einer Oberfläche von auf einer Fördereinrichtung (12) bewegten Objekten (14), wobei die Vorrichtung (10) einen Zeilensensor (20), insbesondere eine Zeilenkamera aufweist, welche die Objekte (14) zur Erzeugung von Bilddaten der Oberfläche zeilenweise in einem zeilenförmigen Lesefenster (22) abtasten kann, das mit der Förderrichtung einen Winkel bildet,
**dadurch gekennzeichnet,**
**dass** ein als mit einem Lichtlaufzeitverfahren Abstände messender Laserscanner oder als entfemungsmessender Bildsensor ausgebildeter Geometrie-Erfassungssensor (18)zur Erfassung der Geometrie der Objekte (14) anhand von Abstandsdaten der Objekte (14) sowie eine Steuerung (24) vorgesehen ist, die dafür ausgebildet ist, basierend auf Geometriedaten des Geometrie-Erfassungssensors (18) jeweils die Lage eines Objekts (14), ein Abstandsprofil der Oberfläche über das Lesefenster (22) aus der Perspektive des Zeilensensors (20) und aus jedem Abstandsprofil eine Aufnahmefrequenz für den Zeilensensor (20) zu erzeugen, den Zeilensensor (20) für die jeweils abzutastende Zeile der Objekte (14) auf die Aufnahmefrequenz einzustellen und die somit entzerrt aufgenommenen zeilenweisen Bilddaten zu einem gleichmäßig aufgelösten Gesamtbild der Oberfläche zusammenzusetzen.

2. Vorrichtung nach Anspruch 1,
wobei die Steuerung dafür ausgebildet ist, aus jedem Abstandsprofil einen zugehörigen Zoomfaktor zu erzeugen und den Zeilensensor (20) für die jeweils abzutastende Zeile der Objekte (14) auf den zugehörigen Zoomfaktor einzustellen.

3. Vorrichtung (10) nach Anspruch 2,
wobei die Steuerung (24) dafür ausgebildet ist, den Zoomfaktor so einzustellen, dass das Lesefenster (22) jeweils eine Ausdehnung hat, die der absoluten maximalen Objektausdehnung in Zeilenrichtung über alle abgetasteten Zeilen (26) eines Objekts (14) entspricht.

4. Vorrichtung (10) nach einem der vorhergehenden Ansprüche,
wobei die Steuerung (24) dafür ausgebildet ist, die Aufnahmefrequenz so einzustellen, dass die abgetasteten Zeilen (26) regelmäßig über die geometrische Oberfläche verteilt werden.

5. Vorrichtung (10) nach einem der vorhergehenden Ansprüche,
wobei die Steuerung (24) dafür ausgebildet ist, eine Fokuseinstellung des Zeilensensors (20) aus einem Maß des Abstandsprofils, insbesondere einem Extremum oder einem Mittelwert, einzustellen und/oder eine Helligkeit des Zeilensensors (20) über eine Belichtungszeit oder einen Verstärkungsfaktor einzustellen, um Veränderungen auszugleichen, welche durch Variation des Zoomfaktors und/oder der Aufnahmefrequenz entstehen.

6. Vorrichtung (10) nach einem der vorhergehenden Ansprüche,
wobei der Geometrie-Erfassungssensor (18) in den Zeilensensor (20) integriert ist.

7. Vorrichtung (10) nach einem der Ansprüche 1 bis 5,
wobei der Geometrie-Erfassungssensor (18) dem Zeilensensor (20) in Förderrichtung vorgeordnet ist und wobei die Steuerung (24) dafür ausgebildet ist, das Abstandsprofil abhängig von der Förderposition der Objekte (14) im Voraus zu berechnen.

8. Vorrichtung (10) nach Anspruch 7,
wobei ein Geschwindigkeitssensor vorgesehen ist, welcher die Fördergeschwindigkeit bestimmen kann, und wobei die Steuerung (24) die von der Förderposition abhängigen Zoomfaktoren und/oder Aufnahmefrequenzen mittels der Fördergeschwindigkeit in zeitabhängige Zoomfaktoren und/oder Aufnahmefrequenzen umrechnen kann.

9. Vorrichtung (10) nach Anspruch 8,
wobei der Geschwindigkeitssensor als einer der folgenden implementiert ist:
- ein Inkrementalgeber an der Fördereinrichtung (12), und/oder
- eine Geschwindigkeits-Auswertungseinrichtung an dem Geometrie-Erfassungssensor (18) oder dem Zeilensensor (20), die eine Verzerrung erwarteter Objektkonturen auswerten kann, und/oder
- eine Vergleichseinheit, welche ein Objektmerkmal in den Geometriedaten und den Bilddaten wiedererkennen und aus der Zeitdifferenz der Datenaufnahme und dem Abstand von Geometrie-Erfassungssensor (18) und Zeilensensor (20) die Geschwindigkeit ermittelt.

10. Vorrichtung (10) nach einem der Ansprüche 7 bis 9,
wobei die Steuerung (24) dafür ausgebildet ist, die Abstandsprofile zu jeder einer maximalen oder vorgegebenen konstanten Aufnahmefrequenz des Zeilensensors (20) entsprechenden Förderposition zu berechnen oder wobei die Steuerung (24) dafür ausgebildet ist, Abstandsprofile nur für ausgezeichnete Förderpositionen (32) zu berechnen, in denen sich insbesondere Ecken oder Kanten eines Objekts (14) im Lesefenster (22) befinden, und die dazwischen liegenden Förderpositionen stufenförmig oder linear zu interpolieren, wobei insbesondere die Steuerung (24) auch die Zoomfaktoren und/oder die Aufnahmefrequenz stufenförmig oder linear nachführen kann.

11. Vorrichtung (10) nach einem der vorhergehenden Ansprüche,
wobei die Steuerung (24) dafür ausgebildet ist, Abstandsprofile in Zeilen in der Umgebung eines Objekts (14) aus Abstandsprofilen des Objektrandes zu extrapolieren, um einen weichen Übergang zu ermöglichen.

12. Vorrichtung (10) nach einem der vorhergehenden Ansprüche,
wobei die Steuerung (24) dafür ausgebildet ist, den Zeilensensor (20) auf einen Basis-Zoomfaktor und/oder eine Basis-Aufnahmefrequenz einzustellen, die einem Referenzabstandsprofil entsprechen, und Abweichungen von Zeile zu Zeile differentiell gegenüber der vorherigen Zeile oder gegenüber dem Basis-Zoomfaktor und/oder der Basis-Aufnahmefrequenz einzustellen.

13. Vorrichtung (10) nach einem der vorhergehenden Ansprüche,
wobei die Steuerung (24) dafür ausgebildet ist, bei Vorhandensein mehrerer Objekte (14) im Lesefeld das Abstandsprofil auf das vom Zeilensensor (20) aus vorderste Objekt (14) oder hinterste Objekt (14) zu beziehen, oder jeweils unter unvollständigem Erfassen der Objekte (14) das vorderste Abstandsprofil zu berechnen.

14. Vorrichtung (10) nach einem der vorhergehenden Ansprüche,
wobei eine Nachbearbeitungseinheit vorgesehen ist, welche für die digitale Nachbearbeitung zur weiteren Entzerrung der Bilddaten ausgebildet ist, und wobei die Steuerung (24) der Nachbearbeitungseinheit für die Verzerrung relevante Parameter übergibt, insbesondere die Schräglage eines Objekts (14) oder die Fördergeschwindigkeit.

15. Verfahren zum Aufnehmen entzerrter Bilder einer Oberfläche von auf einer Fördereinrichtung (12) bewegten Objekten (14), die Objekte (14) mit einem Zeilensensor (20), insbesondere einer Zeilenkamera zur Erzeugung von Bilddaten der Oberfläche zeilenweise in einem zeilenförmigen Lesefenster (22) abgetastet werden, das mit der Förderrichtung (12) einen Winkel bildet,
**dadurch gekennzeichnet,**
**dass** die Geometrie der Objekte (14) anhand von Abstandsdaten der Objekte (14) von einem mittels Lichtlaufzeitverfahren Abstände messenden Laserscanner oder einem entfernungsmessenden Bildsensor erfasst wird und basierend auf den Geometriedaten jeweils die Lage eines Objekts (14), ein Abstandsprofil der Oberfläche über das Lesefenster (22) aus der Perspektive des Zeilensensors (20) und aus jedem Abstandsprofil eine Aufnahmefrequenz für den Zeilensensor (20) erzeugt wird, wobei der Zeilensensor (20) die jeweils abzutastende Zeile der Objekte (14) mit der Aufnahmefrequenz abtastet und die somit entzerrt aufgenommenen zeitenweisen Bilddaten zu einem gleichmäßig aufgelösten Gesamtbild der Oberfläche zusammengesetzt werden.

16. Verfahren nach Anspruch 15,
wobei aus jedem Abstandsprofil ein zugehöriger Zoomfaktor erzeugt wird und der Zeilensensor (20) die jeweils abzutastende Zeile der Objekte (14) mit dem zugehörigen Zoomfaktor abtastet.

17. Verfahren nach Anspruch 16,
wobei der Zoomfaktor jeweils so eingestellt wird, dass das Lesefenster (22) eine Ausdehnung der absoluten maximalen Objektausdehnung in Zeilenrichtung über alle abgetasteten Zeilen eines Objekts (14) hat und/oder die Aufnahmefrequenz so eingestellt wird, dass die abgetasteten Zeilen regelmäßig über die geometrische Oberfläche verteilt liegen.

18. Verfahren Anspruch 16 oder 17,
wobei das Abstandsprofil abhängig von der Förderposition der Objekte (14) im voraus berechnet wird und wobei die Fördergeschwindigkeit bestimmt wird, um die von der Förderposition abhängigen Zoomfaktoren und/oder Aufnahmefrequenzen in zeitabhängige Zoomfaktoren und/oder Aufnahmefrequenzen umzurechnen.

19. Verfahren nach Anspruch 18,
wobei die Abstandsprofile nur für ausgezeichnete Förderpositionen (32) berechnet werden, in denen sich insbesondere Ecken oder Kanten eines Objekts (14) im Lesefenster befinden, und die dazwischen liegenden Förderpositionen stufenförmig oder linear interpoliert und die Zoomfaktoren und/oder die Aufnahmefrequenz entsprechend stufenförmig oder linear nachgeführt werden.

## Claims

1. An apparatus (10), in particular a code reader, for the taking of undistorted images of a surface of objects (14) moved on a conveying device (12), wherein the apparatus (10) has a line sensor (20), in particular a line camera, which can scan the objects (14) linewise for the generation of image data of the surface in a linear reading window (22) which forms an angle with the conveying direction,
**characterized in that**
a geometry detection sensor (18) made as a laser scanner measuring distances using a time of flight of light method or as an image sensor measuring distances is provided for the detection of the geometry of the objects (14) with reference to distance data of the objects (14) and a control (24) is provided which is made to generate, on the basis of geometrical data of the geometry detection sensor (18), in each case, the position of an object (14), a distance profile of the surface over the reading window (22) from the perspective of the line sensor (20) and a taking frequency for the line sensor (20) from each distance profile; to set the line sensor (20) for the respective line of the objects (14) to be scanned to the taking frequency; and to compose the image data thus taken linewise in an undistorted manner to form a uniformly resolved total image of the surface.

2. An apparatus in accordance with claim 1, wherein the control is made to generate an associated zoom factor from each distance profile and to set the line sensor (20) for the respective line of the objects (14) to be scanned to the associated zoom factor.

3. An apparatus (10) in accordance with claim 2, wherein the control (24) is made to set the zoom factor such that the reading window (22) in each case has an extent which corresponds to the absolute maximum object extent in the line direction over all the scanned lines (26) of an object (14).

4. An apparatus (10) in accordance with any one of the preceding claims, wherein the control (24) is made to set the taking frequency such that the scanned lines (26) are distributed in a regular manner over the geometrical surface.

5. An apparatus (10) in accordance with any one of the preceding claims, wherein the control (24) is made to set a focus setting of the line sensor (24) from a measure of the distance profile, in particular from an extreme or a mean value; and/or to set a brightness of the line sensor (20) via an exposure time or via an amplification factor to compensate changes which arise due to variation of the zoom factor and/or of the taking frequency.

6. An apparatus (10) in accordance with any one of the preceding claims, wherein the geometry detection sensor (18) is integrated into the line sensor (20).

7. An apparatus (10) in accordance with any one of the claims 1 to 5, wherein the geometry detection sensor (18) is disposed in front of the line sensor (20) in the conveying direction; and wherein the control (24) is made to calculate the distance profile in advance in dependence on the conveying direction of the objects (14).

8. An apparatus (10) in accordance with claim 7, wherein a speed sensor is provided which can determine the conveying speed; and wherein the control (24) can convert the zoom factors and/or taking frequencies dependent on the conveying position by means of the conveying speed into time-dependent zoom factors and/or taking frequencies.

9. An apparatus (10) in accordance with claim 8, wherein the speed sensor is implemented as one of the following:
- an incremental encoder at the conveying device (12); and/or
- a speed evaluation device at the geometry detection sensor (18) or at the line sensor (20) which can evaluate a distortion of expected object contours; and/or
- a comparator which recognizes an object feature in the geometry data and in the image data again and determines the speed from the time difference of the data taking and the distance of the geometry detection sensor (18) and the line sensor (20).

10. An apparatus (10) in accordance with any one of the claims 7 to 9, wherein the control (24) is made to calculate the distance profiles for each conveying position corresponding to a maximum or preset constant taking frequency of the line sensor (20); or wherein the control (24) is made to calculate distance profiles only for marked conveying positions (32) in which in particular corners or edges of an object (14) are located in the reading window (22); and to interpolate the conveying positions disposed therebetween in step form or linearly, with in particular the control (24) also being able to track the zoom factors and/or the taking frequency in step form or linearly.

11. An apparatus (10) in accordance with any one of the preceding claims, wherein the control (24) is made to extrapolate distance profiles in lines in the environment of an object (14) from distance profiles of the object margin to allow a soft transition.

12. An apparatus (10) in accordance with any one of the preceding claims, wherein the control (24) is made to set the line sensor (20) to a base zoom factor and/or to a base taking frequency which correspond to a reference distance profile and to set differences from line to line differentially with respect to the preceding line or with respect to the base zoom factor and/or the base taking frequency.

13. An apparatus (10) in accordance with any one of the preceding claims, wherein the control (24) is made, when a plurality of objects (14) are present in the reading field, to relate the distance profile to the foremost object (14) or hindmost object (14) from the line sensor (20) or to calculate the foremost distance profile in each case with an incomplete detection of the objects (14).

14. An apparatus (10) in accordance with any one of the preceding claims, wherein a postprocessing unit is provided which is made for digital postprocessing for the further equalization of the image data; and wherein the control (24) transfers parameters relevant to the distortion, in particular the slanted position of an object (14) or the conveying speed.

15. A method for the taking of undistorted images of a surface of objects (14) moved on a conveying device (12), wherein the objects (14) are scanned by a line sensor (20), in particular a line camera, linewise for the generation of image data of the surface in a linear reading window (22) which forms an angle with the conveying direction,
**characterized in that**,
the geometry of the objects (14) is detected with reference to distance data of the objects (14) by a laser scanner measuring distances using a time of flight of light method or by an image sensor measuring distances and, on the basis of geometrical data, in each case, the position of an object (14), a distance profile of the surface over the reading window (22) from the perspective of the line sensor (20) are generated and a taking frequency for the line sensor (20) is generated from each distance profile, with the line sensor (20) scanning the respective line of the objects (14) to be scanned at the taking frequency and the image data thus taken linewise in an undistorted manner being composed to form a uniformly resolved total image of the surface.

16. A method in accordance with claim 15, wherein an associated zoom factor is generated from each distance profile and the line sensor (20) scans the respective line of the objects (14) to be scanned at the associated zoom factor.

17. A method in accordance with claim 16, wherein the zoom factor is set in each case such that the reading window (22) has an extent of the absolute maximum object extent in the line direction over all scanned lines of an object (14) and/or the taking frequency is set such that the scanned lines are disposed regularly over the geometrical surface.

18. A method in accordance with claim 16 or claim 17, wherein the distance profile is calculated in advance in dependence on the conveying position of the objects (14); and wherein the conveying speed is determined to convert the zoom factors and/or taking frequencies dependent on the conveying position into time-dependent zoom factors and/or taking frequencies.

19. A method in accordance with claim 18, wherein the distance profiles are only calculated for marked conveying positions (32) in which in particular corners or edges of an object (14) are located in the reading window and the conveying positions disposed therebetween are interpolated in step form or linearly and the zoom factors and/or the taking frequency are tracked accordingly in step form or linearly.

## Revendications

1. Dispositif (10), en particulier lecteur de codes, pour l'enregistrement d'images déformées d'une surface d'objets (14) déplacés sur un dispositif de transport (12), le dispositif (10) présentant un capteur de lignes (20), en particulier une caméra à lignes, qui peut balayer les objets (14) pour générer des données d'image de la surface ligne par ligne dans une fenêtre de lecture (22) en forme de lignes, qui forme un angle avec le sens de transport,
**caractérisé en ce que**
un scanner laser mesurant des distances avec un procédé de temps de propagation de lumière ou un capteur d'enregistrement de géométrie (18) conçu comme capteur d'images mesurant la distance est prévu pour l'enregistrement de la géométrie des objets (14) à l'aide de données de distance des objets (14) ainsi qu'une commande (24), qui est conçue pour générer sur la base de données de géométrie du capteur d'enregistrement de géométrie (18) à chaque fois la position d'un objet (14), un profil de distance de la surface par la fenêtre de lecture (22) à partir de la perspective du capteur de lignes (20) et à partir de chaque profil de distance une fréquence d'enregistrement pour le capteur de lignes (20), régler le capteur de lignes (20) pour la ligne respective à balayer des objets (14) sur la fréquence d'enregistrement et assembler les données d'images ligne par ligne enregistrées ainsi de façon déformée en une image globale uniformément restituée de la surface.

2. Dispositif selon la revendication 1,
la commande étant conçue pour générer à partir de chaque profil de distance un facteur de zoom associé et régler le capteur de lignes (20) pour la ligne respective à balayer des objets (14) sur le facteur de zoom associé.

3. Dispositif (10) selon la revendication 2,
la commande (24) étant conçue pour régler le facteur de zoom de telle sorte que la fenêtre de lecture (22) a à chaque fois une extension qui correspond à l'extension d'objet maximale absolue dans le sens des lignes au moyen de toutes les lignes balayées (26) d'un objet (14).

4. Dispositif (10) selon l'une quelconque des revendications précédentes,
la commande (24) étant conçue pour régler la fréquence d'enregistrement de telle sorte que les lignes (26) balayées sont réparties régulièrement sur la surface géométrique.

5. Dispositif (10) selon l'une quelconque des revendications précédentes,
la commande (24) étant conçue pour ajuster un réglage de point focal du capteur de lignes (20) à partir d'une cote du profil de distance, en particulier un extrême ou une valeur moyenne et/ou ajuster une luminosité du capteur de lignes (20) au moyen d'un temps d'exposition ou d'un facteur d'amplification, afin de compenser des modifications qui se forment du fait de la variation du facteur de zoom et/ou de la fréquence d'enregistrement.

6. Dispositif (10) selon l'une quelconque des revendications précédentes,
le capteur d'enregistrement de géométrie (18) étant intégré dans le capteur de lignes (20).

7. Dispositif (10) selon l'une quelconque des revendications 1 à 5,
le capteur d'enregistrement de la géométrie (18) étant disposé en amont du capteur de lignes (20) dans le sens de transport et la commande (24) étant conçue pour calculer à l'avance le profil de distance en fonction de la position de transport des objets (14).

8. Dispositif (10) selon la revendication 7,
un capteur de vitesse étant prévu, lequel peut déterminer la vitesse de transport, et la commande (24) pouvant convertir les facteurs de zoom et/ou fréquences d'enregistrement dépendants de la position de transport au moyen de la vitesse de transport en facteurs de zoom et/ou fréquences d'enregistrement dépendants du temps.

9. Dispositif (10) selon la revendication 8,
le capteur de vitesse étant mis en place en tant que l'un des appareils suivantes :
- un transmetteur incrémentiel sur le dispositif de transport (12), et/ou
- un dispositif d'analyse de vitesse sur le capteur d'enregistrement de géométrie (18) ou le capteur de lignes (20), qui peut analyser une distorsion de contours d'objet escomptés, et/ou
- une unité de comparaison, qui peut reconnaître une caractéristique d'objets dans les données de géométrie et les données d'image et détermine la vitesse à partir de la différence de temps de l'enregistrement de données et de la distance entre le capteur d'enregistrement de géométrie (18) et le capteur de lignes (20).

10. Dispositif (10) selon l'une quelconque des revendications 7 à 9,
la commande (24) étant conçue pour calculer les profils de distance pour chaque position de transport correspondant à une fréquence d'enregistrement constante maximale ou prédéfinie du capteur de lignes (20) ou la commande (24) étant conçue pour calculer des profils de distance uniquement pour des positions de transport (32) marquées, dans lesquelles se trouvent en particulier des angles ou des arêtes d'un objet (14) dans la fenêtre de lecture (22), et pour interpoler de façon dégradée ou linéaire les positions de transport intercalaires, en particulier la commande (24) pouvant asservir de façon dégradée ou linéaire également les facteurs de zoom et/ou la fréquence d'enregistrement.

11. Dispositif (10) selon l'une quelconque des revendications précédentes,
la commande (24) étant conçue pour extrapoler des profils de distance dans des lignes dans l'environnement d'un objet (14) à partir de profils de distance du bord de l'objet, afin de permettre une transition souple.

12. Dispositif (10) selon l'une quelconque des revendications précédentes,
la commande (24) étant conçue pour régler le capteur de lignes (20) sur un facteur de zoom de base et/ou une fréquence d'enregistrement de base, qui correspondent à un profil de distance de référence, et régler des écarts de ligne à ligne de façon différentielle par rapport à la ligne précédente ou par rapport au facteur de zoom de base et/ou à la fréquence d'enregistrement de base.

13. Dispositif (10) selon l'une quelconque des revendications précédentes,
la commande (24) étant conçue pour rapporter, en cas de présence de plusieurs objets (14) dans le champ de lecture, le profil de distance à l'objet (14) le plus en avant ou l'objet (14) le plus en arrière à partir du capteur de lignes (20), ou calculer à chaque fois, en enregistrant de façon incomplète les objets (14), le profil de distance le plus en avant.

14. Dispositif (10) selon l'une quelconque des revendications précédentes,
une unité de post-traitement étant prévue, laquelle est conçue pour le post-traitement numérique pour la distorsion ultérieure des données d'images, et la commande (24) transmettant à l'unité de post-traitement des paramètres importants pour la distorsion, en particulier la position inclinée d'un objet (14) ou la vitesse de transport.

15. Procédé pour l'enregistrement d'images déformées d'une surface d'objets (14) déplacés sur un dispositif de transport (12), lesquels objets (14) sont balayés avec un capteur de lignes (20), en particulier une caméra à lignes pour générer des données d'image de la surface ligne par ligne dans une fenêtre de lecture (22) sous forme de lignes, qui forme un angle avec le sens de transport (12),
**caractérisé en ce que**
la géométrie des objets (14) est enregistrée à l'aide de données de distance des objets (14) par un scanner laser mesurant des distances au moyen de procédés de propagation de lumière ou d'un capteur d'images mesurant la distance et, sur la base des données de géométrie, à chaque fois on génère la position d'un objet (14), un profil de distance de la surface par la fenêtre de lecture (22) à partir de la perspective du capteur de lignes (20) et une fréquence d'enregistrement pour le capteur de lignes (20) à partir de chaque profil de distance, le capteur de lignes (20) balayant la ligne respective à balayer des objets (14) avec la fréquence d'enregistrement et les données d'image ligne par ligne enregistrées ainsi de façon déformée étant assemblées pour former une image globale, restituée de façon uniforme, de la surface.

16. Procédé selon la revendication 15,
un facteur de zoom spécifique étant généré à partir de chaque profil de distance et le capteur de lignes (20) balayant la ligne respective à balayer des objets (14) avec le facteur de zoom spécifique.

17. Procédé selon la revendication 16,
le facteur de zoom étant réglé à chaque fois de telle sorte que la fenêtre de lecture (22) a une extension de l'extension d'objet maximale absolue dans le sens des lignes sur toutes les lignes balayées d'un objet (14) et/ou la fréquence d'enregistrement est réglée de telle sorte que les lignes balayées sont réparties régulièrement sur la surface géométrique.

18. Procédé selon la revendication 16 ou 17,
le profil de distance étant calculé à l'avance en fonction de la position de transport des objets (14) et la vitesse de transport étant déterminée pour convertir les facteurs de zoom et/ou fréquences d'enregistrement dépendants de la position de transport en facteurs de zoom et/ou fréquences d'enregistrement dépendants du temps.

19. Procédé selon la revendication 18,
les profils de distance n'étant calculés que pour des positions de transport (32) marquées, dans lesquelles en particulier des angles ou des arêtes d'un objet (14) se trouvent dans la fenêtre de lecture, et les positions de transport intermédiaires étant interpolées de façon dégradée ou linéaire et les facteurs de zoom et/ou la fréquence d'enregistrement étant asservis en conséquence de façon dégradée ou linéaire.
